# FASCICULE DE BREVET EUROPEEN

(11) **EP 1 842 692 B1**
(45) Date de publication et mention de la délivrance du brevet: **07.11.2012**
(21) Numéro de dépôt: 07290402.2
(22) Date de dépôt: 03.04.2007
(51) Int. Cl.: B60B 17/00

(54) **Roue élastique, en particuliar pour un véhicule ferroviaire urbain, son procédé de montage et dispositif de liaison élastique équipant ladite roue**
Federndes Rad, insbesondere für Stadtbahnfahrzeuge, sein Montageprozess und elastische Verbindungsvorrichtung mit der dieses Rad ausgestattet ist
Resilient wheel, in particular for an urban railway vehicle, method of installing it and elastic linking device equipping said wheel

(30) Priorité: 06.04.2006 FR 0603030
(43) Date de publication de la demande: 10.10.2007
(73) Titulaire: Hutchinson, 75008 Paris (FR)
(72) Inventeur: Pic, Pierre, 27150 Etrepagny (FR)
(74) Mandataire: Bolinches, Michel Jean-Marie

(56) Documents cités:
- EP-A1- 0 893 279
- FR-A- 1 126 819
- FR-A1- 2 150 532
- GB-A- 2 153 308

## Description

L'invention concerne une roue élastique, en particulier pour un véhicule ferroviaire urbain, son procédé de montage et un dispositif de liaison élastique équipant ladite roue.

Une liaison élastique montée entre le bandage et le moyeu d'une roue d'un véhicule ferroviaire, selon le préambule de la revendication 1, est notamment décrite dans le document FR-2 766 418 au nom de la Demanderesse. Cette liaison élastique comprend deux blocs annulaires semblables en un matériau élastomère, ayant chacun une forme en tronc de cône dans lesquels sont noyés des renforts métalliques. Les deux blocs sont montés sans aucune adhérisation entre une partie annulaire mâle du bandage qui fait saillie vers l'intérieur, et deux flasques latéraux ou brides annulaires qui sont solidaires du moyeu de la roue. Chaque bloc annulaire comporte des pions anti-glissement qui sont en saillie sur chacune des parois tronconiques interne et externe du bloc. Les pions anti-glissement viennent s'engager dans des encoches ménagées dans les flasques latéraux.

Des roues avec de tels moyens élastiques équipent des véhicules ferroviaires urbains et donnent entière satisfaction. Cependant, le seul inconvénient de ces roues réside dans leur coût de fabrication.

Un but de l'invention est de répondre à ce coût de fabrication par la conception d'une nouvelle liaison élastique procurant les mêmes avantages, mais avec un coût de fabrication réduit.

A cet effet, l'invention propose une roue élastique, en particulier pour un véhicule ferroviaire urbain, ladite roue comprenant un moyeu, un bandage et une liaison élastique intercalée entre le moyeu et le bandage, ladite liaison élastique étant constituée de deux blocs annulaires réalisés en un matériau élastomère qui sont montés entre un flasque central annulaire solidarisé au bandage et deux flasques latéraux annulaires solidaires du moyeu, qui est caractérisé en ce que les deux blocs sont adhérisés sur le flasque central et maintenus en position par des moyens de blocage sur les deux flasques latéraux.

Avantageusement, les deux blocs de la liaison élastique n'incorporent pas de moyens de renfort, et le bandage de la roue est emmanché à force sur le flasque central.

D'une manière générale, les moyens de blocage en position des deux blocs de la liaison élastique sur les flasques latéraux peuvent être constitués par des épaulements ménagés dans les flasques latéraux et entre lesquels viennent se loger lesdits blocs, ou par des nervures en saillie sur les deux blocs et qui se logent dans des encoches ménagées dans les flasques latéraux.

Selon un mode préférentiel de réalisation de l'invention,
- chaque bloc de la liaison élastique à une forme en tronc de cône, les deux blocs étant montés tête-bêche dans deux plans perpendiculaires à l'axe de roue et viennent se loger dans un espace annulaire, à demi-section droite en forme de V ouvert vers l'extérieur, qui est délimité entre le flasque central et les deux flasques latéraux ;
- le flasque central a une demi-section droite de forme triangulaire isocèle, avec un côté qui s'étend parallèlement à l'axe de la roue pour former une surface de contact circulaire, et deux côtés qui font entre eux un angle au sommet α pour délimiter deux surfaces de contact tronconiques et annulaires ;
- chaque flasque latéral présente en demi-section droite un côté incliné qui forme une surface tronconique de contact avec le bloc associé de la liaison élastique ; et
- un flasque latéral est solidaire du moyeu de la roue, et l'autre flasque latéral est une couronne qui est rapportée par des moyens de fixation qui mettent en compression les deux blocs de la liaison élastique.

Une telle roue élastique présente notamment l'avantage de simplifier la fabrication des deux blocs de la liaison élastique qui ne contiennent plus de moyens de renfort métalliques.

L'invention concerne également un dispositif de liaison élastique pour une roue de véhicule ferroviaire urbain, qui est caractérisé en ce qu'il comprend un flasque central contre lequel sont adhérisés deux blocs réalisés en un matériau élastomère, en ce que la roue comprend un bandage emmanché à force sur le flasque central, et en ce que les deux blocs sont mis en compression par deux flasques latéraux solidarisés au moyeu de la roue.

Ce dispositif de liaison élastique présente l'avantage de pouvoir être pré-assemblé et envoyé ensuite à un fabricant de roue pour être monté sur le moyeu d'une roue.

L'invention concerne également un procédé de montage d'une roue élastique, en particulier pour un véhicule ferroviaire urbain, qui est caractérisé en ce qu'il consiste :
- à adhériser deux blocs réalisés en un matériau élastomère de part et d'autre d'un flasque central ;
- à emmancher à force le bandage de la roue sur le flasque central ; et
- à mettre en compression les deux blocs entre deux flasques latéraux solidarisés au moyeu de la roue.

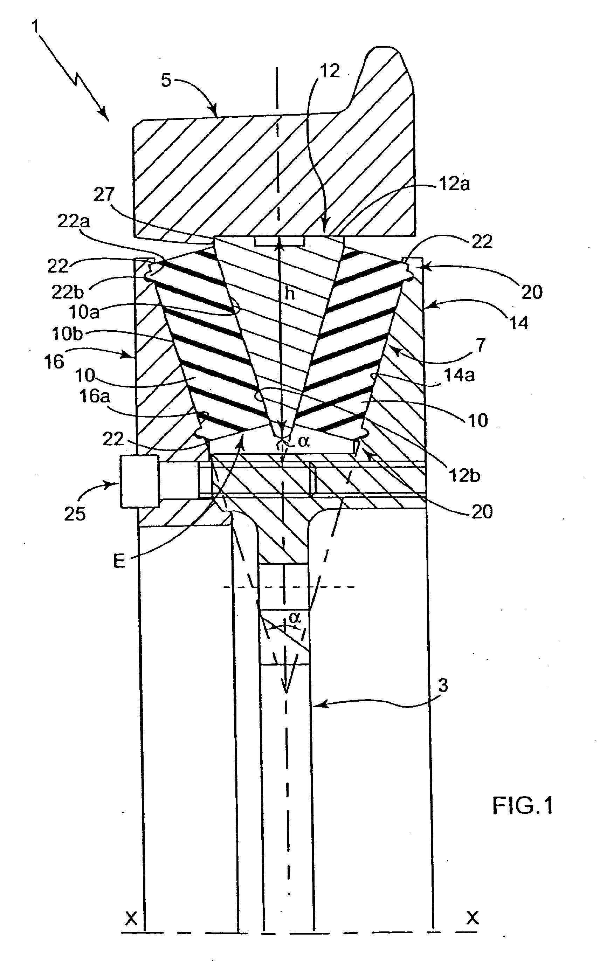

D'autres avantages, caractéristiques et détails de l'invention ressortiront du complément de description qui va suivre en référence au dessin annexé, donné uniquement à titre d'exemple et qui est une demi-vue en coupe d'une roue élastique selon l'invention.

En se référant au dessin, la roue élastique 1 comprend, d'une façon connue en soi, un moyeu métallique 3, un bandage métallique annulaire 5 destiné à assurer un contact métal-métal avec un rail (non représenté) sur lequel roule un véhicule ferroviaire urbain par exemple équipé de ces roues 1, et une liaison élastique annulaire 7 qui est montée entre le moyeu 3 et le bandage 5.

La liaison élastique 7 comprend deux blocs annulaires 10 qui sont réalisés en un matériau élastomère, chaque bloc 10 ayant globalement une forme en tronc de cône. Les deux blocs 10 sont montés tête-bêche dans deux plans perpendiculaires à l'axe X-X de la roue 1, et viennent se loger dans un espace annulaire E, à demi-section droite en forme de V ouvert vers l'extérieur, qui est délimité entre un flasque annulaire central 12 et deux flasques annulaires latéraux 14 et 16. Les deux blocs 10 présentent deux surfaces tronconiques 10a qui sont en regard l'une de l'autre, qui forment entre elles un angle α, et deux surfaces tronconiques 10b qui sont opposées l'une à l'autre et qui forment également entre elles un angle α.

Le flasque central annulaire 12 présente une demi-section droite de forme triangulaire isocèle, de hauteur h, avec un côté qui s'étend parallèlement à l'axe X-X de la roue pour former une surface de contact extérieure circulaire 12a, et deux côtés inclinés qui font entre eux un angle au sommet α pour former deux surfaces annulaires de contact 12b.

Le flasque latéral annulaire 14 s'étend à la périphérie du moyeu 3 et présente un côté incliné qui fait un angle α avec l'axe X-X de la roue 1 pour former une surface d'appui tronconique et annulaire 14a. Le flasque latéral annulaire 16 constitue une pièce rapportée ou couronne qui présente un côté incliné qui fait également un angle α avec l'axe X-X de la roue pour former une surface d'appui tronconique et annulaire.

Au montage de la roue 1, les deux surfaces tronconiques 10a des deux blocs 10 sont respectivement adhérisées sur les deux surfaces tronconiques de contact 12b du flasque central 12, et les deux surfaces tronconiques 10b sont respectivement mises en contact non adhérisé avec la surface tronconique 14a du flasque latéral 14 et la surface tronconique 16a du flasque latéral 16, qui est rapporté sur le moyeu 3.

Des moyens de blocage 20 sont prévus pour maintenir en position les deux blocs 10 contre les deux flasques latéraux 14 et 16. Ces moyens de blocage 20 sont constitués par deux épaulements périphériques 22 ménagés sur les surfaces tronconiques 14a et 16a des flasques latéraux 14 et 16, et entre lesquels viennent se loger à force les deux blocs 10. Pour améliorer le blocage en position des deux blocs 10, on peut prévoir en plus ou en variante des nervures 22a au niveau des blocs 10 qui viennent se loger dans des encoches 22b ménagées dans les surfaces tronconiques 14a et 16a des flasques latéraux 14 et 16. Le serrage du flasque latéral 16 est assuré par des moyens de fixation 25 tels que des vis, et ce serrage permet de mettre en compression les deux blocs 10.

Le bandage 5 est monté par emmanchement à force sur la surface de contact circulaire 12a du flasque central 12. A cet effet, on ménage un épaulement 27 à la surface interne circulaire du bandage 5 et contre lequel vient en appui le flasque latéral 12.

L'invention concerne également un procédé de montage de la roue élastique 1 décrite précédemment.

Selon ce procédé, on assure tout d'abord l'adhérisation des deux blocs 10 de la liaison élastique 7 sur le flasque central 14 pour former un sous-ensemble ou un dispositif de liaison élastique qui peut être vendu et envoyé à un constructeur de roues. Ensuite, on emmanche à force le bandage 5 autour du flasque central 14, et on procède ensuite au montage du bandage 5 auquel est fixé la liaison élastique 7 sur le moyeu 3 de la roue 1.

L'invention ne se limite pas au mode de réalisation précédemment décrit. En effet, sans sortir du cadre de l'invention, l'Homme du métier peut envisager des variantes de réalisation, en particulier prévoir deux flasques latéraux qui sont rapportés sur le moyeu, et intégrer le flasque central au bandage de la roue, mais cette intégration ne permet plus un pré-assemblage de la liaison élastique avant son montage sur la roue.

## Revendications

1. Roue élastique, en particulier pour un véhicule ferroviaire urbain, ladite roue comprenant un moyeu (3), un bandage (5) et une liaison élastique (7) intercalée entre le moyeu (3) et le bandage (5), ladite liaison élastique (7) étant constituée de deux blocs annulaires (10) réalisés en un matériau élastomère qui sont montés entre un flasque central annulaire (12) solidarisé au bandage (5) et deux flasques latéraux annulaires (14, 16) solidaires du moyeu, **caractérisée en ce que** les deux blocs (10) sont adhérisés sur le flasque central (12) et maintenus en position par des moyens de blocage (20) sur les deux flasques latéraux (14, 16).

2. Roue élastique selon la revendication 1, dans laquelle les deux blocs (10) de la liaison élastique (7) n'incorporent pas de moyens de renfort.

3. Roue élastique selon la revendication 1 ou 2, dans laquelle le bandage (5) de la roue (1) est emmanché à force sur le flasque central (12).

4. Roue élastique selon l'une des revendications précédentes, dans laquelle les moyens de blocage (20) en position des deux blocs (10) de la liaison élastique (7) sur les flasques latéraux (14, 16) sont constitués par des épaulements (22) ménagés dans les flasques latéraux (14, 16) et entre lesquels viennent se loger lesdits blocs (10).

5. Roue élastique selon l'une des revendications 1 à 3, dans laquelle les moyens de blocage (20) en position des deux blocs (10) de la liaison élastique (7) sur les flasques latéraux (14, 16) sont constitués par des nervures (22a) en saillie sur les deux blocs (10) et qui se logent dans des encoches (22b) ménagées dans les flasques latéraux (14, 16).

6. Roue élastique selon l'une des revendications précédentes, dans laquelle chaque bloc (10) de la liaison élastique (7) à une forme en tronc de cône, les deux blocs (10) étant montés tête-bêche dans deux plans perpendiculaires à l'axe de roue (X-X) et viennent se loger dans un espace annulaire E, à demi-section droite en forme de V ouvert vers l'extérieur, qui est délimité entre le flasque central (12) et les deux flasques latéraux (14, 16).

7. Roue élastique selon la revendication 6, dans laquelle le flasque central (12) à une demi-section droite en forme triangulaire isocèle, avec un côté qui s'étant parallèlement à l'axe (X-X) de la roue pour former une surface de contact circulaire (12a), et deux côtés qui font entre eux un angle au sommet α pour délimiter deux surfaces de contact tronconiques et annulaires (12b).

8. Roue élastique selon la revendication 7, dans laquelle chaque flasque latéral (14, 16) présente en demi-section droite un côté incliné qui forme une surface tronconique de contact (14a, 16a) avec le bloc associé (10) de la liaison élastique (7).

9. Roue élastique selon la revendication 8, dans laquelle le flasque latéral (14) est solidaire du moyeu (3) de la roue, et le flasque latéral (16) forme une couronne qui est rapporté par des moyens de fixation (25) qui mettent en compression les deux blocs (10) de la liaison élastique (7).

10. Dispositif de liaison élastique pour une roue de véhicule ferroviaire urbain, **caractérisé en ce qu'**il comprend un flasque central (12) contre lequel sont adhérisés deux blocs (10) réalisés en un matériau élastomère.

11. Dispositif de liaison élastique selon la revendication 10, dans lequel la roue (1) comprend un bandage (5) emmanché à force sur le flasque central (12).

12. Dispositif de liaison élastique selon la revendication 10 ou 11, dans lequel les deux blocs (10) sont mis en compression par deux flasques latéraux (14, 16) solidarisés au moyeu (3) de la roue.

13. Procédé de montage d'une roue élastique, en particulier pour un véhicule ferroviaire urbain, **caractérisé en ce qu'**il consiste :
- à adhériser deux blocs (10) réalisés en un matériau élastomère de part et d'autre d'un flasque central (12) ;
- à emmancher à force le bandage (5) de la roue sur le flasque central (12) ; et
- à mettre en compression les deux blocs (10) entre deux flasques latéraux (14, 16) solidarisés au moyeu (3) de la roue.

## Claims

1. Elastic wheel, particularly for an urban railway vehicle, the said wheel comprising a hub (3), a tyre (5) and an elastic connection (7) interposed between the hub (3) and the tyre (5), the said elastic connection (7) consisting of two annular blocks (10) made of an elastomeric material that are mounted between a central annular end-plate (12) fixedly attached to the tyre (5) and two lateral annular end-plates (14, 16) fixedly attached to the hub, **characterized in that** the two blocks (10) are adhesively bonded to the central end-plate (12) and held in position by locking means (20) on the two lateral end-plates (14, 16).

2. Elastic wheel according to Claim 1, in which the two blocks (10) of the elastic connection (7) do not incorporate any reinforcement means.

3. Elastic wheel according to Claim 1 or 2, in which the tyre (5) of the wheel (1) is force-fitted onto the central end-plate (12).

4. Elastic wheel according to one of the preceding claims, in which the means (20) for positionally locking the two blocks (10) of the elastic connection (7) on the lateral end-plates (14, 16) consist of shoulders (22) that are made in the lateral end-plates (14, 16) and between which the said blocks (10) are housed.

5. Elastic wheel according to one of Claims 1 to 3, in which the means (20) for positionally locking the two blocks (10) of the elastic connection (7) on the lateral end-plates (14, 16) consist of ribs (22a) that protrude on the two blocks (10) and that are housed in recesses (22b) made in the lateral end-plates (14, 16).

6. Elastic wheel according to one of the preceding claims, in which each block (10) of the elastic connection (7) has a truncated cone shape, the two blocks (10) being mounted head-to-tail in two planes perpendicular to the wheel axis (X-X) and being housed in an annular space E with a V-shaped straight half-section open towards the outside, that is delimited between the central end-plate (12) and the two lateral end-plates (14, 16).

7. Elastic wheel according to Claim 6, in which the central end-plate (12) has a straight half-section in the shape of an isosceles triangle, with one side which extends parallel to the axis (X-X) of the wheel to form a circular contact surface (12a), and two sides that, between them, form an angle α at the summit to delimit two frustoconical and annular contact surfaces (12b).

8. Elastic wheel according to Claim 7, in which each lateral end-plate (14, 16) has in straight half-section an inclined side that forms a frustoconical surface (14a, 16a) of contact with the associated block (10) of the elastic connection (7).

9. Elastic wheel according to Claim 8, in which the lateral end-plate (14) is fixedly attached to the hub (3) of the wheel, and the lateral end-plate (16) forms a ring that is fitted by fastening means (25) that place the two blocks (10) of the elastic connection (7) in compression.

10. Elastic connection device for a wheel of an urban railway vehicle, **characterized in that** it comprises a central end-plate (12) against which two blocks (10) made of an elastomeric material are adhesively bonded.

11. Elastic connection device according to Claim 10, in which the wheel (1) comprises a tyre (5) force-fitted onto the central end-plate (12).

12. Elastic connection device according to Claim 10 or 11, in which the two blocks (10) are placed in compression by two lateral end-plates (14, 16) fixedly attached to the hub (3) of the wheel.

13. Method of mounting an elastic wheel, in particular for an urban railway vehicle, **characterized in that** it consists:
- in adhesively bonding two blocks (10) made of an elastomeric material on either side of a central end-plate (12);
- in force-fitting the tyre (5) of the wheel onto the central end-plate (12); and
- in placing the two blocks (10) in compression between two lateral end-plates (14, 16) fixedly attached to the hub (3) of the wheel.

## Patentansprüche

1. Elastisches Rad, insbesondere für ein städtisches Schienenfahrzeug, wobei das Rad eine Nabe (3), eine Bereifung (5) und eine zwischen der Nabe (3) und der Bereifung (5) eingefügte elastische Verbindung (7) umfasst, wobei die elastische Verbindung (7) gebildet ist aus zwei aus einem elastomeren Material realisierten ringförmigen Blöcken (10), welche zwischen einem an der Bereifung (5) befestigten ringförmigen Flansch (12) und zwei an der Nabe befestigten seitlichen ringförmigen Flanschen (14), (16) angebracht ist, **dadurch gekennzeichnet, dass** die zwei Blöcke (10) an dem zentralen Flansch (12) haftend gemacht sind und durch Sperrmittel (20) an den zwei seitlichen Flanschen (14, 16) in Position gehalten werden.

2. Elastisches Rad nach Anspruch 1, wobei die zwei Blöcke (10) der elastischen Verbindung (7) keine Verstärkungsmittel beinhalten.

3. Elastisches Rad nach Anspruch 1 oder 2, wobei die Bereifung (5) des Rades (1) kraftschlüssig auf den zentralen Flansch (12) gepasst ist.

4. Elastisches Rad nach einem der vorhergehenden Ansprüche, wobei die Mittel zum Blockieren (20) in Position der zwei Blöcke (10) der elastischen Verbindung (7) an den seitlichen Flanschen (14, 16) gebildet sind durch Vorsprünge (22), welche in den seitlichen Flanschen (14, 16) ausgebildet sind und zwischen welchen die Blöcke (10) unterkommen.

5. Elastisches Rad nach einem der Ansprüche 1-3, wobei die Mittel zum Blockieren (20) in Position der zwei Blöcke (10) der elastischen Verbindung (7) an den seitlichen Flanschen (14, 16) gebildet sind durch Rippen (22a), welche über die zwei Blöcke (10) hervorstehen und welche in Nuten (22b) unterkommen, die in den seitlichen Flanschen (14, 16) ausgebildet sind.

6. Elastisches Rad nach einem der vorhergehenden Ansprüche, wobei jeder Block (10) der elastischen Verbindung (7) eine kegelstumpfartige Form aufweist, wobei die zwei Blöcke (10) entgegengesetzt gerichtet in zwei zur Achse des Rades (X-X) senkrechten Ebenen angebracht sind und unterkommen in einem ringförmigen Raum E, mit einem Mittelquerschnitt in Form eines nach außen offenen V, welcher begrenzt ist zwischen dem zentralen Flansch (12) und den zwei seitlichen Flanschen (14, 16).

7. Elastisches Rad nach Anspruch 6, wobei der zentrale Flansch (12) einen Mittelquerschnitt in Form eines gleichschenkligen Dreiecks mit einer Seite, welche sich parallel zu der Achse (X-X) des Rades erstreckt, um eine kreisförmige Kontaktfläche (12a) auszubilden, und zwei Seiten, welche untereinander einen Scheitelwinkel α bilden, um zwei kegelstumpfartige und ringförmige Kontaktflächen (12b) zu begrenzen, aufweist.

8. Elastisches Rad nach Anspruch 7, wobei jeder seitliche Flansch (14, 16) im Mittelquerschnitt eine geneigte Seite aufweist, welche eine kegelstumpfartige Kontaktfläche (14a, 16a) mit dem zugehörigen Block (10) der elastischen Verbindung (7) ausbildet.

9. Elastisches Rad nach Anspruch 8, wobei der seitliche Flansch (14) an der Nabe (3) des Rades befestigt ist, und der seitliche Flansch (16) einen Kranz bildet, welcher angebracht ist über Befestigungsmittel (25), die die zwei Blöcke (10) der elastischen Verbindung (7) unter Druck setzen.

10. Vorrichtung zur elastischen Verbindung für ein Rad eines städtischen Schienenfahrzeuges, **dadurch gekennzeichnet, dass** es einen zentralen Flansch (12) umfasst, an welchem zwei aus einem elastomeren Material realisierte Blöcke (10) haftend gemacht sind.

11. Vorrichtung zur elastischen Verbindung nach Anspruch 10, wobei das Rad (1) eine Bereifung (5) umfasst, welche kraftschlüssig auf den zentralen Flansch (12) gepasst ist.

12. Vorrichtung zur elastischen Verbindung nach Anspruch 10 oder 11, wobei die zwei Blöcke (10) durch zwei an der Nabe (3) des Rades befestigte seitliche Flansche (14, 16) unter Druck gesetzt sind.

13. Verfahren zur Anbringung eines elastischen Rades, insbesondere für ein städtisches Schienenfahrzeug, **dadurch gekennzeichnet, dass** es beruht auf:
- Haftendmachen von zwei aus einem elastomeren Material realisierten Blöcken (10) auf beiden Seiten eines zentralen Flansches (12);
- Kraftschlüssiges Passen der Bereifung (5) des Rades auf den zentralen Flansch (12); und
- unter Druck Setzen der zwei Blöcke (10) zwischen zwei an der Nabe (3) des Rades befestigten seitlichen Flanschen (14, 16).
